# EUROPÄISCHE PATENTSCHRIFT

(11) **EP 0 671 624 B1**
(45) Veröffentlichungstag und Bekanntmachung des Hinweises auf die Patenterteilung: **21.11.2001**
(21) Anmeldenummer: 95103091.5
(22) Anmeldetag: 04.03.1995
(51) Int. Cl.: G01N 30/60, B01D 15/08

(54) **Chromatographiesäule und -kartusche**
Chromatography column and cartridge
Colonne chromatographique et cartouche

(30) Priorität: 10.03.1994 DE 4407889
(43) Veröffentlichungstag der Anmeldung: 13.09.1995
(73) Patentinhaber: MERCK PATENT GmbH, 64293 Darmstadt (DE)
(72) Erfinder: Hauke, Günther, D-64367 Mühltal (DE); Sättler, Günther, D-64354 Reinheim (DE)

(56) Entgegenhaltungen:
- CH-A- 408 465
- GB-A- 2 162 489
- US-A- 4 389 313
- US-A- 4 636 316
- US-E- R E31 974

## Beschreibung

Die Erfindung betrifft metallene Chromatographie- und Kartuschenrohre, sowie für Chromatographiesäulen geeignete Dicht- und Stützelemente.

Chromatographiesäulen bestehen aus einem mit Sorbens gefüllten oder füllbaren Rohr, das durch Endstücke abgeschlossen ist. Zur Aufnahme des Chromatographierohres in die Halterung dienen Adaptersysteme. Diese können aus Verschraubungen bestehen. Bevorzugterweise wird nicht das Chromatographierohr selbst mit Gewinden versehen, sondern lediglich mit Verankerungselementen, z.B. Flanschen oder Nuten, gehalten. Eine derartige Konstruktion ist Gegenstand des Patentes EP 0 268 185. Normalerweise besitzen Chromatographie- oder Kartuschenrohre an beiden Enden Gewinde beziehungsweise Verankerungselemente. Es ist jedoch auch denkbar, daß ein Ende des Chromatographie- oder Kartuschenrohres anderweitig verschlossen ist, oder daß z.B. mehrere Verankerungselemente vorhanden sind, die den Einbau von Vorsäulen ermöglichen.

Bei Verwendung von metallenen Chromatographie- oder Kartuschenrohren werden Flansche und Nuten durch spanabhebende Formgebung erzeugt. Dabei muß die Wandstärke des Rohrrohlings ein Mehrfaches des für die Druckfestigkeit notwendigen Maßes betragen. Flansche können auch getrennt gefertigt und dann auf das ansonsten glatte Rohr aufgepreßt, aufgelötet, aufgeschweißt oder aufgeklebt werden. Diese nachträglichen Bearbeitungsschritte sind jedoch aufwendig. Außerdem treten bei derartig nachbearbeiteten Teilen Unregelmäßigkeiten auf, die beispielsweise die Druckfestigkeit verschlechtern oder zu Unebenheiten der Rohrinnenwand führen.

Das Sorbensbett von Chromatographiesäulen und -kartuschen wird durch Endstücke abgeschlossen, die im wesentlichen Filterelemente, sowie Dicht- und Stützelemente enthalten. Übliche Konstruktionen derartiger Endstücke, wie sie beispielsweise aus US 5,169,522 bekannt sind, sehen stets vor, daß die Endstücke aus mehreren Teilen bestehen:
a) ein Grundkörper, der häufig mehrteilig ausgeführt ist,
b) eine oder mehrere Dichtungen, und
c) eine Siebplatte als Filterelement.

Falls anstelle der starren Siebplatte ein Gewebe oder ähnliches als Filterelement benutzt wird, enthalten diese bekannten Endstücke noch Einspannvorrichtungen für diese flexiblen Filterelemente. Insgesamt ist die Herstellung derartiger Endstücke aufwendig.

In der Europäischen Patentanmeldung EP 0 416 326 werden Endstücke offenbart, die zusätzlich Dichtungselemente aufweisen, und die über die Enden des Chromatographierohres überkragen.

Es wurde gefunden, daß es möglich ist, einteilige selbstdichtende Dichtund Stützelemente herzustellen. Diese können zusätzlich Aufnahmemittel für ein Siebelement enthalten.

Es wurde weiter gefunden, daß es möglich ist, ausgehend von vergleichbar dünnwandigen Rohrrohlingen durch Umformungsverfahren, wie z.B. Hämmern, Rollen, Stauchen, Pressen oder Kneten, oder durch Kombinationen dieser Verfahren Chromatographie- oder Kartuschenrohre mit Verankerungselementen herzustellen, die eine im wesentlichen konstante Wandstärke über die gesamte Rohrlänge aufweisen. Diese erfindungsgemäßen Chromatographie- oder Kartuschenrohre können auch durch Urformungsverfahren, wie z.B. Gießen oder Sintern, hergestellt werden. Diese Rohre können aus den für Chromatographie- oder Kartuschenrohre üblichen Materialien hergestellt werden, insbesondere aus Metallen, wie z.B. Edelstahl.

Gegenstand der Erfindung ist eine Chromatographiesäule oder -kartusche umfassend ein mit Sorbens gefülltes oder füllbares Metallrohr (5) mit Verankerungselementen, ein Endstück mit Befestigungsmitteln für die Elutionsmittelzu- und -ableitung, sowie mit Dichtungs-, Stütz- und Filterelement und zugehörigen Verschraubungselementen, dadurch gekennzeichnet, daß das im Inneren des genannten Metallrohrs befindliche Dicht- und Stützelement einteilig ausgeführt ist, und aus einem im wesentlichen zylindrischen Grundkörper (1) mit einer kegelstumpfförmigen oder zylindrischen Ausnehmung (3,12) besteht, der an einer Endfläche durch ein Stützelement (4) begrenzt ist.

Gegenstand der Erfindung sind Chromatographiesäulen, sowie Chromatographiekartuschen, im wesentlichen bestehend aus Endstücken mit Befestigungen für die Elutionsmittelzu- und -ableitung, sowie mit Dichtungs-, Stütz- und Filterelementen und gegebenenfalls den zugehörigen Verschraubungselementen, dadurch gekennzeichnet, daß sie mit einem einteiligen Dicht- und Stützelement, bestehend aus einem im wesentlichen zylindrischen Grundkörper, der mit einer kegelstumpfförmigen oder zylindrischen Ausnehmung versehen ist, wobei an einer Endfläche ein Teil stehen bleibt, das als Stützelement für das Filterelement dient, und mit einem Chromatographierohr mit Verschraubungs- beziehungsweise Verankerungselementen, hergestellt aus einem einheitlichen Rohling, mit einer im wesentlichen konstanten Wandstärke im Verlauf der gesamten Rohrlänge, ausgestattet sind. Das Stützelement weist eine oder mehrere Bohrungen für den Durchtritt des Flüssigkeitsstromes auf.

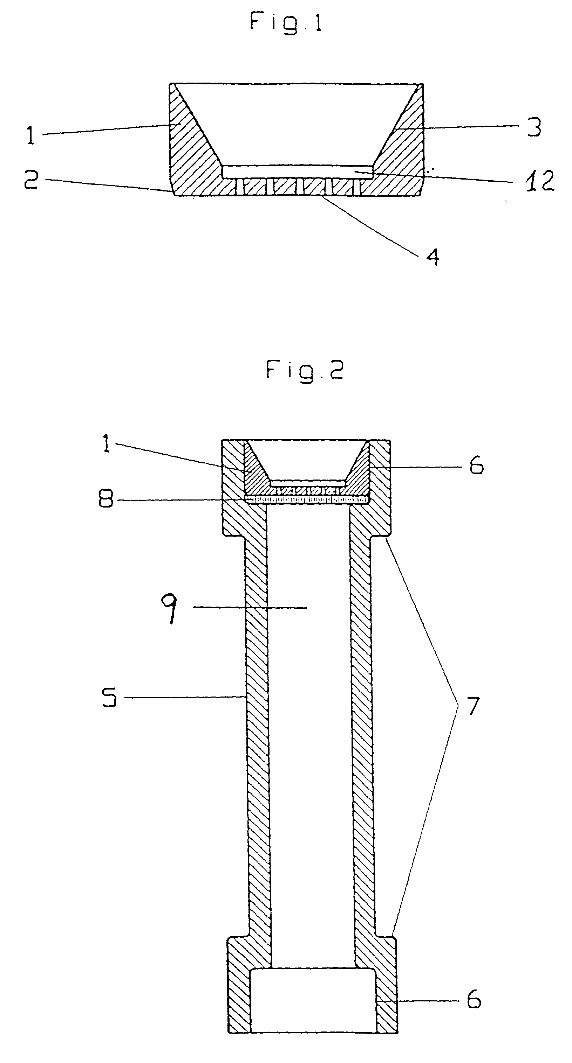

Abbildung 1 zeigt einen Längsschnitt durch ein erfindungsgemäßes Dichtund Stützelement.

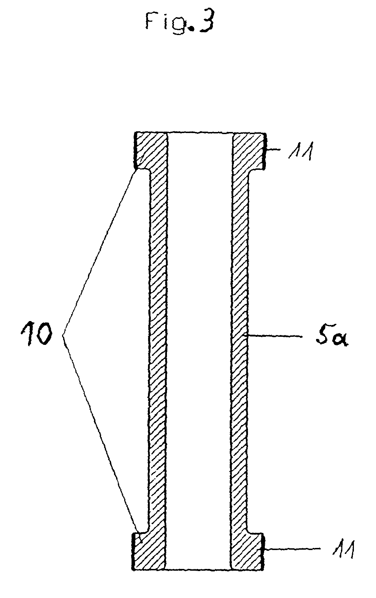

Die Abbildungen 2 und 3 zeigen Längsschnitte durch die erfindungsgemäßen Chromatographie- oder Kartuschenrohre. Abbildung 2 zeigt ein Kartuschenrohr, bei dem die Endstücke in zusätzlichen Ausformungen gehalten sind. Die äußeren Schultern dienen wiederum als Widerlager für Verschraubungselemente, wie sie beispielsweise in EP 0 268 185 beschrieben sind. Abbildung 3 zeigt ein Kartuschenrohr mit endständigen Flanschen, in die Befestigungselemente eingreifen, wie sie beispielsweise wie in EP 0 268 185 beschrieben sind. Die Endstücke mit Befestigungen für die Elutionsmittelzu- und -ableitung, sowie mit Dichtungs-, Stütz- und Filterelementen werden entweder auf den Stirnflächen gehalten oder in die Rohrenden eingeführt.

Das erfindungsgemäße Dicht- und Stützelement (siehe Abbildung 1) besteht aus einem im wesentlichen zylindrischen Grundkörper (1), dessen Kanten durch Fasen (2) abgeschrägt sein können. Dieser Grundkörper besteht beispielsweise aus PTFE oder PVDF. Weitere für Endstücke von Chromatographiesäulen geeignete Materialien, insbesondere Kunststoffe, sind dem Fachmann bekannt. Der äußere Durchmesser ist an den Innendurchmesser des Chromatographie- oder Kartuschenrohres angepaßt. Deswegen und wegen der Verformbarkeit der für den Grundkörper verwendeten Materialien dichtet der Grundkörper die Säule ab, ohne daß es zusätzlicher Dichtungseinrichtungen, z.B. O-Ring- oder Lippendichtungen bedarf. Von einem Ende des Grundkörpers erstreckt sich eine kegelstumpfförmige Ausnehmung (3), in die die Anschlußelemente für Elutionsmittelzulauf und -ablauf eingreifen. Diese Ausnehmung kann sich in einen flach-zylindrischen Teil (12) verlängern. Das andere Ende des Grundkörpers besteht aus einem flach-zylindrischen Teil mit Löchern und dient als Stützelement (4).

Bevorzugterweise wird das Dicht- und Stützelement aus einem Stück hergestellt, beispielsweise im Spritzgußverfahren. Es ist jedoch auch möglich, das Stützelement getrennt herzustellen und in eine entsprechende Aussparung des Grundkörpers einzubringen und durch Schweißen, Kleben, Pressen oder Bördeln zu befestigen.

Das erfindungsgemäße Dicht- und Stützelement erlaubt gleichermaßen die Verwendung von flexiblen oder starren Siebelementen. Beispiele für starre Siebelemente sind Fritten oder Siebe aus Metall, keramischen Materialien, Kunststoff oder Glas, Beispiele für flexible Siebelemente sind Papier, Membranen oder Gewebe aus Glas- oder Kunststoffasern. Es können auch verschiedene Typen von Siebelementen kombiniert verwendet werden.

Durch den bevorzugten einteiligen Aufbau des erfindungsgemäßen Dichtund Stützelementes vereinfacht sich die Herstellung. Der einfache Aufbau der Säulenendstücke mit den erfindungsgemäßen Dicht- und Stützelementen erlaubt einen einfachen Zusammenbau und auch das einfache Auswechseln von Siebelementen.

Abbildung 2 zeigt ein Kartuschenrohr (5) mit Auskragungen (6) und Schultern (7), in die die Befestigungselemente (nicht dargestellt) eingreifen. In einer der endständigen Auskragungen ist ein Dicht- und Stützelement mit seinem zylindrischen Grundkörper (1) eingesetzt. Ein Filterelement (8) befindet sich zwischen Dicht- und Stützelement und dem Sorbensbett (9). Die Wandstärke des Rohres ist entlang seiner Längsrichtung im wesentlichen konstant.

Abbildung 3 zeigt ein Kartuschenrohr (5a) mit endständigen Flanschen (10a).

Bei der Verwendung in einer Chromatographiesäule würde die Außenseite der Flanschen (11) beispielsweise jeweils ein Gewinde zur Aufnahme der Säulenendstücke tragen (vergleiche Abbildung 3).

Die erfindungsgemäßen Chromatographie- und Kartuschenrohre besitzen die üblichen Abmessungen; d.h. für analytische Anwendungen betragen die Durchmesser einige Millimeter bis ca. 2 cm. Größere Durchmesser bis zu ca. 1 m sind für präparative Anwendungen üblich. Die Säulenlängen betragen für Vorsäulen oder für Säulen, die für Probenvorbereitung vorgesehen sind, zwischen ca. 3 und 20 mm. Längere Säulen sind als Trennsäulen üblich (2 bis 50 cm, z.T. noch länger).

Die erfindungsgemäßen Chromatographie- und Kartuschenrohre weisen keine Unregelmäßigkeiten auf, wie sie häufig durch Schweißen oder Kleben entstehen. Bei vergleichbarer Druckbelastung kann die Materialstärke gegenüber Rohren, die mit spanabhebenden Bearbeitungsmethoden hergestellt sind, deutlich verringert werden. Damit einher gehen Gewichtseinsparungen und die schnellere Temperierung der Säule. Die Güte der Innenoberfläche von dünnwandigen Rohren ist im allgemeinen besser gewährleistet als bei starkwandigen Rohren. Der vereinfachte Aufbau ist insbesondere bei Vorsäulen oder Säulen für die Probenvorbereitung wichtig, da diese Säulen oft nur einmal benutzt werden.

## Patentansprüche

1. Chromatographiesäule oder -kartusche umfassend ein mit Sorbens gefülltes oder füllbares Metallrohr (5) mit Verankerungselementen, ein Endstück mit Befestigungsmitteln für die Elutionsmittelzu- und -ableitung, sowie mit Dichtungs-, Stütz- und Filterelement und zugehörigen Verschraubungselementen, **dadurch gekennzeichnet, daß** das im Inneren des genannten Metallrohrs befindliche Dichtund Stützelement einteilig ausgeführt ist, und aus einem im wesentlichen zylindrischen Grundkörper (1) mit einer kegelstumpfförmigen oder zylindrischen Ausnehmung (3,12) besteht, der an einer Endfläche durch ein Stützelement (4) begrenzt ist.

2. Chromatographiesäule oder -kartusche nach Anspruch 1, **dadurch gekennzeichnet, daß** das Metallrohr (5) aus einem einteiligen, dünnwandigen Rohling hergestellt ist und eine im wesentlichen konstante Wandstärke im Verlauf der gesamten Rohrlänge aufweist.

## Claims

1. Chromatography column or cartridge comprising a metal tube (5), which is filled or can be filled with sorbent and has anchoring elements, an end piece having fastening means for the eluting agent supply and discharge line, and having a sealing, support and filter element and associated screw-fastening elements, **characterized in that** the seal and support element located inside the said metal tube is designed in a single piece, and consists of an essentially cylindrical base body (1) which has a frustoconical or cylindrical recess (3, 12) and is bounded on an end face by a support element (4).

2. Chromatography column or cartridge according to Claim 1, **characterized in that** the metal tube (5) is produced from a single-piece, thin-walled blank and has an essentially constant thickness over the entire tube length.

## Revendications

1. Colonne ou cartouche de chromatographie comprenant un tuyau métallique (5) rempli ou pouvant être rempli d'un sorbant, le tuyau métallique comprenant des éléments d'ancrage, un embout doté de moyens de fixation pour l'arrivée et l'évacuation d'un moyen d'élution, comprenant également un élément d'étanchéité, un élément support et un élément de filtration et des éléments correspondants de fixation par vis,
**caractérisée en ce que** l'élément d'étanchéité et l'élément support se trouvant à l'intérieur du tuyau métallique mentionné sont configurés comme une seule pièce, ces éléments se composant d'un corps de base (1) pratiquement cylindrique doté d'une partie creuse (3, 12) tronconique ou cylindrique, lequel corps de base est limité, au niveau d'une surface terminale, par un élément support (4).

2. Colonne ou cartouche de chromatographie selon la revendication 1, **caractérisée en ce que** le tuyau métallique (5) est fabriqué à partir d'une pièce brute monobloc à paroi mince et **en ce que** le tuyau métallique présente une épaisseur de paroi pratiquement constante sur la totalité de la longueur du tuyau.
